# DEMANDE DE BREVET EUROPEEN

(11) **EP 0 549 497 A1**
(43) Date de publication de la demande: **30.06.1993**
(21) Numéro de dépôt: 92420482.9
(22) Date de dépôt: 23.12.1992
(51) Int. Cl.: B29B 17/02

(54) **Procédé de régénération des matières plastiques et l'installation mettant en oeuvre le procédé**

(30) Priorité: 27.12.1991 FR 9116495
(71) Demandeur: Lagneaux, Didier, F-69004 Lyon (FR)
(72) Inventeur: Lagneaux, Didier, F-69004 Lyon (FR)
(74) Mandataire: Dupuis, François

(57) **Abrégé**

Procédé de régénération des matières plastiques en vue de la fabrication de produits plastiques composites à usage courant et l'installation mettant en oeuvre le procédé.

Le procédé consiste :
- à sélectionner les matières plastiques triées en trois familles (A) (B) (C) de nature différente,
- à introduire les différentes familles dans des concasseurs (1) (2) (3),
- on procède au concassage des différentes familles pour l'obtention de matières (A') (B') (C') dans un mélangeur (7) afin d'obtenir une masse collectée (M) traitée dans des dosages appropriés de chaque quantité (Q1) (Q2) (Q3) des matières (A') (B') (C').
- on procède ensuite à l'extrusion du mélange précité de la masse (M) puis à son introduction dans des moules (8),
- On procède ensuite à un stockage de la masse (M) pendant une durée déterminée dans les moules,
- on procède au démoulage de ces derniers en vue d'obtenir les produits régénérés finaux, lesdits produits pouvant être ensuite travaillés en vue de la constitution de produits de substitution aux produits à base de bois.

## Description

Procédé de régénération des matières plastiques en vue de la fabrication de produits plastiques composites à usage courant et l'installation mettant en oeuvre le procédé.

L'invention se rattache au secteur technique du traitement et de la récupération des matières plastiques en vue de leur recyclage pour la fabrication de nouveaux produits.

Dès l'origine de l'industrie des matières plastiques, le problème des déchets a été plus ou moins bien pris en compte. Face aux développements considérables des produits en matière plastique, aux usages les plus divers, avec des tonnages de plus en plus importants de déchets que l'on retrouve soit dans des décharges réglementées, soit en nuisance dans l'environnement quotidien, la pression des mouvements écologiques a permis de prendre conscience de ce grave problème de destruction de l'environnement, et a poussé l'ensemble des partenaires sociaux aidés par une prise de conscience des pouvoirs publics à rechercher des solutions aptes à résoudre ce problème.

On a ainsi été amené à considérer le traitement des matières plastiques à récupérer ou à régénérer comme devant être une industrie à part entière avec toutes les contraintes économiques en résultant.

Ainsi plusieurs stratégies ont été poursuivies avec des axes d'orientation différents qui permettent la régénération des matières plastiques ou de certaines matières plastiques en produits secondaires pouvant par exemple se substituer aux produits du bois classique pour fabriquer par exemple des planches, des dés à palettes ou autres.

Ces techniques actuelles présentent cependant des insuffisances et inconvénients importants qui ne permettent pas leur développement et le traitement de toutes les matières plastiques.

Une première solution proposée consiste dans le traitement des matières plastiques par la réutilisation des matières nobles d'une même famille pour obtenir des produits moyens et bas de gamme. L'avantage de cette approche réside dans le fait que l'utilisation des matières plastiques régénérées pour fabriquer des substituts à des produits en bois, peut s'effectuer en utilisant des matériels de transformation standard ainsi que les mêmes unités de fabrication que la production normale à base de matières de bois.

Cette approche présente néanmoins d'importants inconvénients qui sont les suivants :
- cette solution exige un lavage et un tri des matières plastiques en lots d'une même famille, ce qui rend le procédé coûteux pour les opérations préalables nécessaires,
- cette solution entraîne après le tri une perte de tonnage substantielle et ne résout donc pas le traitement et la régénération des déchets de,matières plastiques non sélectionnées. Ceci rend donc un écoulement du tonnage inutilisable, problématique et ne résout en rien son élimination physique;
- cette solution est par ailleurs coûteuse, et le coût final de la matière régénérée par le procédé et utilisable pour la conception de produits secondaires de remplacement est très proche du coût de la matière initiale en bois à laquelle elle devrait se substituer;
- on doit également considérer que le panel de produits finis est limité ce qui réduit ses domaines d'application et d'utilisation.

Une seconde solution pratiquée consiste dans la réalisation de produits en matière plastique prélablement mélangés afin d'obtenir des produits finis. Cette solution offre l'avantage de réduire les coûts de lavage et de triage des lots et de limiter la perte de tonnage à certaines matières plastiques non réutilisables. Cette seconde solution présente néanmoins des inconvénients importants avec en particulier la contrainte de fabrication de pièces massives, obligatoire. Il en résulte des défauts d'aspect dûs à la masse à refroidir, un débit de fabrication faible de par la durée nécessaire au refroidissement de cette masse. Il faut par ailleurs un équipement industriel spécial et coûteux.

Une troisième solution consiste dans l'élimination des matières plastiques par combustion. Si cette solution peut présenter un intérêt dans le fait qu'elle concerne toutes les matières plastiques, et qu'elle peut engendrer un apport d'énergie important résultant de la combustion, des contraintes existent, importantes, et qui sont telles qu'en pratique cette solution est inexploitable. Il faut en effet que les installations soient en parfait état pour garantir la non-pollution des fumées, ainsi que le traitement de celles-ci. Il ne faut pas en effet que sous couvert d'un traitement de la régénération des déchets de matières plastiques répondant à un souci de préservation de l'environnement, on créé d'une autre manière une pollution dérivée par les fumées d'hydrocarbures dégagées par la combustion des matières plastiques. En outre, le coût économique de telles industries de régénération reste à établir.

Le but recherché selon l'invention était donc de concevoir, à la lumière des expériences actuelles, de leurs limites et inconvénients précités, un nouveau procédé qui permette dans de bonnes conditions économiques, la mise en valeur et la récupération de toutes les matières plastiques, procédé n'engendrant pas d'investissements lourds particuliers et qui permette d'offrir une gamme de produits dits secondaires et régénérés avec un panel d'application très étendu.

Un autre but recherché selon l'invention était de concevoir un procédé nouveau qui permette l'élaboration de produits pouvant être utilisés, travaillés par les industries de transformation du bois, comme des produits des substitutions aux produits à base de bois, et sans exiger une modification des parcs machines et équipements pour le travail du bois.

Un autre but recherché selon l'invention était de concevoir un procédé qui puisse à terme et à grande échelle d'exploitation, permettre de fabriquer des quantités très importantes de produits de substitution aux très nombreux produits en bois, en préservant ainsi et en contribuant à une limitation de la déforestation tout en répondant aux contraintes écologiques actuelles de la maîtrise des déchets des produits en matière plastique de toutes natures.

Ces buts et d'autres encore ressortiront bien de la suite de la description.

Selon une première caractéristique, le procédé est remarquable en ce qu'il consiste:
- à sélectionner les matières plastiques triées en trois familles (A)(B)(C), la famille (A) étant constituée par des polymères dits de "commodités", la famille (B) par des polymères dits "techniques" et la famille (C) par tous autres produits à base de matière plastique,
- à introduire les différentes familles respectivement dans des concasseurs, la quantité de produits issus de la famille (A) étant préalablement dosée, tandis que les produits des familles (B) et (C) sont introduits sans mélange ni dosage dans lesdits concasseurs,
- on procède ensuite au concassage des différentes familles pour l'obtention de matières (A')(B')(C') qui sont ensuite stockées respectivement sur des doseurs pondéraux,
- on procède ensuite à l'introduction des matières (A')(B')(C') dans un mélangeur afin d'obtenir une masse collectée (M) traitée dans des dosages appropriés de chaque quantité (Q1)(Q2)(Q3) des matières (A')(B')(C'),
- on procède ensuite à l'extrusion du mélange précité de la masse (M) puis à son introduction dans des moules dont les formes correspondent à celles des produits régénérés finaux à obtenir,
- on procède ensuite à un stockage de la masse (M) pendant une durée déterminée dans les moules,
- on procède ensuite au démoulage de ces derniers en vue d'obtenir les produits régénérés finaux, lesdits produits pouvant être ensuite travaillés, découpés et subir toutes opérations d'usinage ou autres, en vue de la constitution de produits de substitution aux produits à base de bois.

Selon une autre caractéristique de l'invention, le procédé est remarquable en ce que le concassage des produits de la famille (A) s'effectue à température ambiante tandis que le concassage des produits de la famille (B) est un concassage cryogénique permettant l'obtention de produits sous forme de poudre, le concassage des produits de la famille (C) étant également un concassage cryogénique permettant d'obtenir des produits en forme de poudre devenant des charges minérales.

Pour fixer l'objet de l'invention, on le décrit maintenant d'une manière non limitative illustrée aux figures du dessin où :
- la figure 1 est une vue à caractère schématique illustrant les moyens de mise en oeuvre du procédé selon l'invention,
- la figure 2 est une vue à caractère schématique illustrant les phases de démoulage des produits régénérés obtenus selon l'invention,
- les figures 3A, 3B, 3C illustrent des exemples de réalisation de produits dits secondaires après mise en oeuvre du procédé selon l'invention.

Afin de rendre plus concret l'objet de l'invention, on le décrit maintenant d'une manière non limitative illustrée aux figures des dessin.

Le procédé de régénération des matières plastiques selon l'invention consiste à sélectionner des matières plastiques collectées en les triant en trois familles (A), (B) et (C) dont les caractéristiques sont précisées ci-après.

La famille (A) inclut les polymères que l'on peut appeler de "commodités" qui comprennent les polyéthylènes, les polystyrènes, les polychlorures de vinyle et les polypropylènes.

La famille (B) inclut les polymères que l'on peut dénommer "techniques" et qui comprennent notamment, les polyamides, les polyuréthanes, les acrylonitrilebutadienestyrènes, les polytéréphtalates d'éthylène glycol, les polytétrofluoroéthylènes, les polyméthylmétacrylates.

La famille (C) inclut tous les autres produits à base de matière plastique, avec des complexes multi-matières tels que : plastiques/aluminium, plastiques/papiers, plastiques/plastiques, les alliages multi-matières tels que : plastiques/charges minérales, plastiques/bois, ainsi que les matériaux composites thermo-durcissables et les matériaux caoutchouteux réticulés.

Après triage des trois familles (A), (B) et (C) précitées, les produits collectés pour chacune de ces trois familles sont envoyés dans des concasseurs respectivement référencés par (1),(2) et (3). Le concasseur (1) reçoit les produits de la famille (A) du type polyétylènes, polypropylènes, polystyrènes, polychlorures de vinyle et ce quels que soient le grade et la structure des produits récupérés (films, emballages, pièces à injecter, bouteilles...). Les produits sont concassés à température ambiante et on obtient une matière (A') qui est stockée dans un doseur pondéral (4), cette matière définissant la qualité de l'essence du produit plastique régénéré. De par ces différents composants, cette matière (A') constitue la référence du produit final qui sera régénéré car les composants tels que polyéthylène et polypropylène lui confèrent des propriétés de résilience et de souplesse, le polystyrène lui confère des propriétés de rigidité, et le polychlorure de vinyle lui confère des propriétés anti-feu. Le dosage et la répartition préalables de ces 4 composants dans la matière (A') permettent ainsi de définir les qualités du produit final régénéré en fonction des ses différentes applications.

Simultanément ou non au traitement et concassage des produits de la famille (A), s'effectue alors le traitement des matières plastiques dites "techniques" appartenant à la famille (B) dans le concasseur (2). L'alimentation de ce concasseur s'effectue au fur et à mesure que les déchets se présentent sans prémélange et sans répartition préalablement étudiée. De manière particulière, le concassage des produits de la famille (B) est un concassage cryogénique permettant après cette opération l'obtention de produits sous forme de poudre. Après leur passage dans le concasseur, les matières (B') en poudre obtenues sont réceptionnées sur un doseur pondéral (5).

Parallèlement, la troisième famille (C) résultant de produits très hétéroclites est broyée dans le concasseur (3) par un concassage cryogénique permettant d'obtenir des produits sous forme de charges minérales qui sont stockées dans un doseur pondéral (6) définissant ainsi une matière (C').

La phase suivante du procédé selon l'invention consiste à diriger dans un mélangeur (7) avec trémie (7-1) collectrice des quantités (Q1), (Q2), (Q3) des trois familles (A'), (B') (C') des produits concassés résultant des familles initiales (A), (B), (C). Durant cette phase, on respecte des dosages spécifiques de sorte que dans la masse collectée (M) la quantité (Q1) de produits issus de la famille (A) soit majoritaire et prépondérante dans l'ensemble du mélange. Ainsi la quantité (Q1) des produits concassés issus de la famille (A) ou (A') en matières transformées doit représenter 40 à 100 % de la masse globale (M) obtenue du mélange, la quantité (Q2) des produits de la famille (B) ou (B') transformés de 0 à 40 % et la quantité (Q3) des produits de la famille (C) ou (C') transformée de 0 à 20 %. Dans un dosage préférentiel, les produits de la famille (A)-(A') sont à concurrence de 50 à 70 %, les produits de la famille (B)-(B') de 25 à 35 %, les produits de la famille (C)-(C') de 5 à 15 %. Dans un dosage optimum, les produits de la famille (A)-(A') sont à concurrence de 60 %, ceux de la famille (B)-(B') de 30 % et ceux de la famille (C)-(C') 10 %.

Pendant la phase du mélange, on peut injecter éventuellement une huile de vidange ou produit similaire dans le mélangeur (7) pour assouplir et plastifier le produit qui sera obtenu. La masse (M) du mélange est transformée par une extrudeuse ou groupe d'injection (9), après montée en température, pour permettre la fusion des produits notamment de la famille (A'), afin d'obtenir un magma qui est ensuite introduit dans un ou plusieurs moules (8). La matière (A') est mise en fusion totalement, la matière (B') peut l'être partiellement, tandis que la matière (C') reste inerte. Chaque moule (8) peut faire partie d'une batterie de moules (non illustrée) montée de toute manière appropriée sur des éléments de convoyage, transporteurs et autres, afin de permettre leur remplissage par le mélange obtenu. Les moules présentent dans leur partie inférieure des orifices (8-1) destinés à être en regard de la sortie de l'extrudeuse ou groupe d'injection pour permettre leur remplissage.

Les moules sont de forme correspondant au produit final à obtenir. Dans l'exemple illustré, le moule présente une forme cylindrique permettant ainsi d'obtenir un produit final issu du mélange précité ayant une forme cylindrique pouvant représenter un manchon, tronc d'arbre, ou autre. Il est évident que cette forme n'est pas limitative.

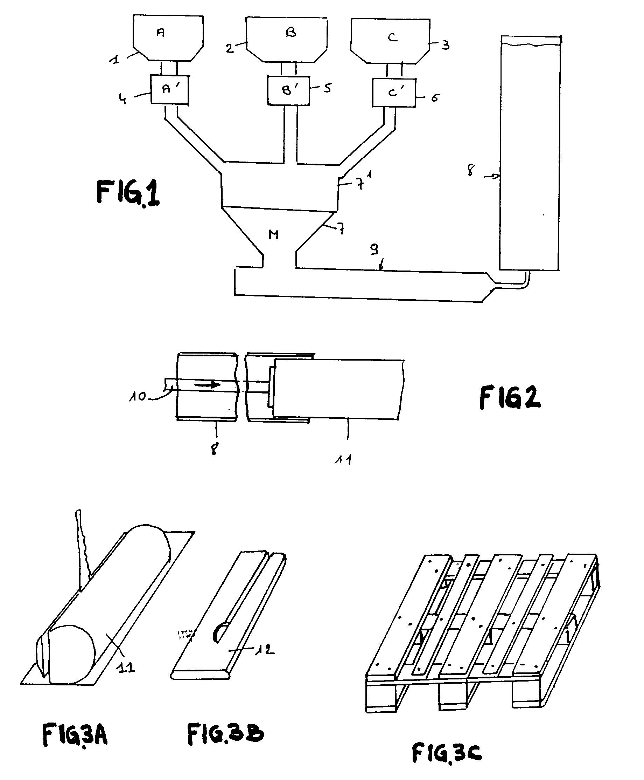

Lorsque le moule est plein, il est alors nécessaire de nourrir le volume inséré dans le moule afin de réduire au maximum les bulles de gaz dans le produit fini. On introduit ainsi dans le moule une pression déterminée. Après un stockage du mélange dans le moule pendant une durée de 24 à 48 heures environ et refroidissement, on procède à la phase de démoulage. Le moule étant ouvert à ses extrémités, le produit final obtenu sous forme de manchon, tronc ou autre, est extrait du moule par un effet de poussée résultant par exemple et non limitativement de l'action d'un vérin (10) agissant en poussée à l'une des extrémités du produit final. Il y a lieu de considérer que le démoulage est facilité grâce à une réduction de 1 à 2 % du volume du produit initialement introduit dans le moule par suite de la phase de refroidissement et de retrait de la matière moulée. Le produit obtenu se présente sous la forme d'un manchon ou d'un tronc ou sous toute autre forme et peut ensuite, après une période de stabilisation à l'environnement normal, être traité en vue de la fabrication de produits secondaires. On a par exemple illustré à la figure 3A, le produit final obtenu sous forme d'un tronc (11). Ce tronc peut par exemple être scié longitudinalement pour l'obtention de planches (12). Ces planches peuvent être utilisées pour la fabrication de palettes. Les troncs obtenus peuvent être également sectionnés transversalement pour constituer des plots, des dés ou autres. En fonction de l'essence donnant la qualité du produit final obtenu, on pourra déterminer ses caractéristiques particulières et l'utiliser dans des applications appropriées.

Ce type de produit régénéré peut constituer des produits de substitution aux produits à base de bois.

L'invention résout ainsi en majeure partie les problèmes de tri des matières plastiques en permettant également l'utilisation des matières plastiques condamnées actuellement telles que les complexes et alliages muni-matières.

L'invention résout également le problème de la productivité des pièces massives en dissociant la fabrication en fusion des pièces massives de la fabrication de produits finis à température ambiante.

L'invention permet également par son faible investissement et son ouverture sur la filière bois existante, de placer des sites de production à faible investissement près des déchéteries ou encore des sites de produits finis.

Le procédé selon l'invention offre d'autres avantages tels que l'obtention de troncs de matière plastique très facilement usinables sur les matériels actuels de transformation du bois sans exiger de changement de ces derniers. Les produits obtenus peuvent présenter l'apparence du bois par décoration, collage, peinture et autres.

Les produits ne sont pas limités dans leur forme puisqu'ils dépendent essentiellement des moules à réaliser. On peut ainsi obtenir, sans investissement particulier, des formes classiques cylindriques, parallélépipédiques.

Le stockage des produits finis régénérés ne pose pas de problème particulier.

## Revendications

**-1-** Procédé de régénération des matières plastiques en vue de la fabrication de produits plastiques composites à usage courant, caractérisé en ce qu'il consiste :
- à sélectionner les matières plastiques triées en trois familles (A)(B)(C), la famille (A) étant constituée par des polymères dits de "commodités", la famille (B) par des polymères dits "techniques" et la famille (C) par tous autres produits à base de matière plastique,
- à introduire les différentes familles respectivement dans des concasseurs (1)(2)(3), la quantité de produits issus de la famille (A) étant préalablement dosée, tandis que les produits des familles (B) et (C) sont introduits sans mélange ni dosage dans lesdits concasseurs,
- en ce que le concassage des produits de la famille (A) s'effectue à température ambiante tandis que le concassage des produits de la famille (B) est un concassage cryogénique permettant l'obtention de produits sous forme de poudre, le concassage des produits de la famille (C) étant également un concassage cryogénique permettant d'obtenir des produits en forme de poudre devenant des charges minérales,
- et en ce que l'on procède ensuite au concassage des différentes familles pour l'obtention de matières (A')(B')(C') qui sont ensuite stockées respectivement sur des doseurs pondéraux (4)(5)(6),
- on procède ensuite à l'introduction des matières (A')(B')(C') dans un mélangeur (7) afin d'obtenir une masse collectée (M) traitée dans des dosages appropriés de chaque quantité (Q1)(Q2)(Q3) des matières (A')(B')(C'),
- on procède ensuite à l'extrusion du mélange précité de la masse (M) puis à son introduction dans des moules (8) dont les formes correspondent à celles des produits régénérés finaux à obtenir,
- on procède ensuite à un stockage de la masse (M) pendant une durée déterminée dans les moules,
- on procède ensuite au démoulage de ces derniers en vue d'obtenir les produits régénérés finaux, lesdits produits pouvant être ensuite travaillés, découpés et subir toutes opérations d'usinage ou autres, en vue de la constitution de produits de substitution aux produits à base de bois.

**-2-** Procédé selon la revendication 1, caractérisé en ce que les produits de la famille (A) incluent les polymères qui comprennent les polyéthylènes, les polystyrènes, les polychlorures de vinyle et les polypropylènes.

**-3-** Procédé selon la revendication 1, caractérisé en ce que les produits de la famille (B) incluent les polymères qui comprennent notamment, les polyamides, les polyuréthanes, les acrylonitrilebutadienestyrènes, les polytéréphtalates d'éthylène glycol, les polytétrofluoroéthylènes, les polyméthylmétacrylates.

**-4-** Procédé selon la revendication 1, caractérisé en ce que les produits de la famille (C) incluent tous les autres produits à base de matière plastique, avec des complexes multi-matières tels que : plastiques/aluminium, plastiques/papiers, plastiques/plastiques, les alliages multi-matières tels que: plastiques/charges minérales, plastiques/bois, ainsi que les matériaux composites thermo-durcissables et les matériaux caoutchouteux réticulés.

**-5-** Procédé selon les revendications 1 et 2 ensemble, caractérisé en ce que les produits de la famille (A) sont concassés en une matière (A') qui définit la qualité de l'essence du produit plastique final régénéré par un dosage et une répartition des différents composants de ladite matière (A').

**-6-** Procédé selon l'une quelconque des revendications 1 et 4, caractérisé en ce que la masse collectée (M) obtenue dans le mélangeur comprend des matières (A')(B')(C')dans les proportions suivantes :
- la quantité (Q1) des produits concassés issus de la famille (A) ou (A') dans la proportion de 40 à 100 % de la masse globale (M) obtenue du mélange,
- la quantité (Q2) des produits de la famille (B) ou (B') de 0 à 40 %
- la quantité (Q3) des produits de la famille (C) ou (C') de 0 à 20 %.

**-7-** Procédé selon la revendication 6, caractérisé en ce que dans un dosage préférentiel, les produits de la famille (A)-(A') sont à concurrence de 50 à 70 %, les produits de la famille (B)-(B') de 25 à 35 %, les produits de la famille (C)-(C') de 5 à 15 %.

**-8-** Procédé selon la revendication 6, caractérisé en ce que dans un dosage optimum, les produits de la famille (A)-(A') sont à concurrence de 60 %, ceux de la famille (B)-(B') de 30 % et ceux de la famille (C)-(C') 10 %.

**-9-** Procédé selon la revendication 1, caractérisé en ce que durant la phase de mélange des produits issus des familles (A)-(A'),(B)-(B'),(C)-(C') on injecte une huile de vidange pour assouplir et plastifier le produit obtenu.

**-10-** Procédé selon la revendication 1, caractérisé en ce que après remplissage du ou des moules par le mélange obtenu se présentant sous forme de magma en provenance de l'extrudeuse ou groupe d'injection, on procède à la mise en pression du moule à une valeur déterminée.

**-11-** Installation de mise en oeuvre du procédé selon l'une quelconque des revendications 1 à 10, caractérisée en ce qu'elle comprend des concasseurs (1), (2) et (3) destinés à recevoir des familles de produits en matière plastique à régénérer et préalablement triés, le concasseur (1) fonctionnant à température ambiante et les concasseurs (2) et (3) étant des concasseurs cryogéniques, lesdits concasseurs étant en relation respectivement pour chacune des familles avec des doseurs pondéraux (4)(5)(6), lesdits doseurs étant en relation avec un mélangeur (7) avec trémie receptrice, ledit mélangeur étant associé à une extrudeuse (9) pour introduire la masse du mélange transformé dans un ou plusieurs moules (8) susceptibles de stocker, traiter, et mettre en forme les produits en matière plastique régénérés destinés ultérieurement à être travaillés, découpés et subir toutes opérations d'usinage en vue de la constitution de produits de substitution à des produits à base de bois, des moyens (10) permettant l'extraction des produits régénérés hors des moules.

**-12-** Produits régénérés en matière plastique obtenus par la mise en oeuvre du procédé selon une quelconque des revendications 1 à 10 et présentant une forme cylindrique parallélépipèdique ou autres.
